# EUROPÄISCHE PATENTSCHRIFT

(11) **EP 2 260 742 B1**
(45) Veröffentlichungstag und Bekanntmachung des Hinweises auf die Patenterteilung: **05.09.2012**
(21) Anmeldenummer: 10005729.8
(22) Anmeldetag: 02.06.2010
(51) Int. Cl.: A47B 47/00, F16B 12/26, F16B 12/38, F16B 12/46

(54) **Möbelsystem**
Furniture system
Système de meuble

(30) Priorität: 08.06.2009 DE 202009008093 U
(43) Veröffentlichungstag der Anmeldung: 15.12.2010
(73) Patentinhaber: Caga Vertriebsgesellschaft mbH, 49163 Bohmte (DE)
(72) Erfinder: Eugen Gamper, 49324 Melle (DE)
(74) Vertreter: Ellberg, Nils

(56) Entgegenhaltungen:
- EP-A1- 0 058 220
- WO-A1-85/01996
- FR-A- 1 449 041
- US-A- 3 229 334
- US-A- 3 365 224

## Beschreibung

Die Erfindung betrifft ein Möbelsystem zur Bildung eines Regals oder eines regalähnlichen Möbelstücks gemäß dem Oberbegriff des Anspruchs 1.

Es sind Möbelsysteme bekannt, welche aus mehreren Möbelelementen zusammengesetzt werden. Diese Möbelsysteme können sowohl nur Möbelelemente, als auch Verbindungselemente aufweisen. Weiterhin ist es bekannt, solche Möbelsysteme zerlegbar zu gestalten, insbesondere derart, dass die Möbelelemente voneinander oder von einem jeweiligen Verbindungselement lösbar ausgebildet sind. Demnach ist mindestens eine Ausnehmung im jeweiligen Möbelelement und/oder im Verbindungselement vorgesehen, wobei ein Lösungswerkzeug in die Ausnehmung einführbar ist zum Lösen der Verbindung zwischen dem jeweiligen Möbelelement und dem Verbindungselement durch Einwirkung des Lösungswerkzeugs auf das Koppelstück. Ein solches Möbelsystem ist besonders vorteilhaft, da das zur Verbindung des jeweiligen Möbelelements mit dem Verbindungselement dienende Koppelstück auf diese Weise von außen unsichtbar angeordnet sein kann. Dennoch kann das jeweilige Möbelelement von dem Verbindungselement gelöst werden, indem das Lösungswerkzeug in die Ausnehmung eingeführt wird. Ein solches Möbelsystem ist beispielsweise aus der US 3 229 334 A bekannt.

Nachteilig an diesen bekannten Lösungen ist, dass zusätzliche, zur Verbindung der Möbelelemente untereinander oder mit einem Verbindungselement dienende Verbindungsmittel auch nach der Verbindung der Bauteile miteinander sichtbar bleiben, da sie zur zerlegbaren Gestaltung eines solchen Möbelsystems von einer Außenseite her zugänglich bleiben müssen. Insbesondere bleiben dabei Schraubenköpfe oder auch Koppelstücke sichtbar, welche die Ästhetik eines Möbelsystems stören.

Der Erfindung liegt daher die Aufgabe zugrunde, ein Möbelsystem zu schaffen, welches einfach montierbar sowie demontierbar ist, wobei insbesondere die zur Verbindung der Möbelelemente untereinander bzw. mit einem jeweiligen Verbindungselement verwendeten Verbindungsmittel nicht sichtbar ausgebildet sind.

Ein Möbelsystem zur Lösung dieser Aufgabe weist die Merkmale des Anspruchs 1 auf. Demnach weist das Koppelstück Vorsprünge auf, welche mit dem Verbindungselement in Eingriff bringbar sind, wobei die Vorsprünge an elastisch verformbaren Zapfen des Koppelstücks angeordnet sind und wobei die Vorsprünge durch elastische Verformung der Zapfen, insbesondere in einer Richtung quer zur Längsausdehnung der jeweiligen Ausnehmung, außer Eingriff mit dem Verbindungselement bringbar sind. Ein derart ausgebildetes Koppelstück kann auf einfache Weise in das Verbindungselement eingeschoben werden, insbesondere in einen zur Gestalt des Koppelstücks korrespondierenden Durchbruch im Verbindungselement. Sodann wird durch die elastische Verformung der Zapfen bewirkt, dass die Vorsprünge des Koppelstücks in das Verbindungselement einrasten und das Möbelelement, an welchem das Koppelstück angeordnet ist, lösbar formschlüssig mit dem Verbindungselement verbinden.

Gemäß einer bevorzugten Ausgestaltung der Erfindung ist die jeweilige Ausnehmung im Verbindungselement gebildet, wobei insbesondere das Verbindungselement ein Hohlprofil ist. Weiterhin weist das Hohlprofil vorzugsweise einen rechteckigen, insbesondere einen quadratischen Querschnitt auf. Ein solches Verbindungselement kann auf einfache Weise aus einem Hohlprofil, welches zum Beispiel ein Strangpressprofil ist, gebildet sein. Der rechteckige bzw. quadratische Querschnitt des Hohlprofils stellt sicher, dass die Außenflächen des Hohlprofils senkrecht zueinander stehen. Auf diese Weise sind die Möbelelemente derart am Verbindungselement positionierbar, insbesondere mit einer ihrer rechtwinklig zu den Seitenflächen angeordneten Stirnseiten, dass zum Beispiel als Wangen- und/oder Regalböden bzw. -borten ausgebildete Möbelelemente allein durch die Ausgestaltung des Verbindungselementes senkrecht aufeinander stehen. Ein quadratischer Querschnitt bewirkt zudem, dass das Verbindungselement symmetrisch um seine Längsachse ausgebildet ist und damit universell in vier Ausrichtungen einsetzbar ist.

Gemäß einer weiteren Ausgestaltung der Erfindung ist die jeweilige Ausnehmung durch das Verbindungselement und durch ein Möbelelement begrenzt. Dadurch wird ermöglicht, das Verbindungselement in einer anderen Weise, nämlich nicht als Hohlprofil, zu gestalten. Besonders bevorzugt ist das Verbindungselement ein Winkelprofil wobei insbesondere die jeweilige Ausnehmung durch einen Schenkel des Winkelprofils und ein Möbelelement begrenzt ist. Das Winkelprofil kann derart an einer Stirnseite bzw. an einem Ende eines Möbelelementes angeordnet sein, dass hierdurch sowohl eine Anordnung eines anderen Möbelelementes an der Stirnseite als auch an der durch das Winkelprofll teilweise überdeckten Fläche des Möbelelementes angeordnet werden kann. Dies macht das erfindungsgemäße Möbelsystem besonders flexibel. Außerdem ist denkbar, das Verbindungselement lediglich als Profil mit flachem, rechteckigem Querschnitt auszubilden. Damit kann, zum Bespiel zur Anordnung eines Regalbodens an einer Seitenfläche einer Wange, an jeder beliebigen Stelle der Seitenfläche der Wange eine Befestigungsmöglichkeit für einen Regalboden geschaffen werden. Die zur Einführung des Lösungswerkzeugs dienende Ausnehmung kann dabei z.B. durch Einfräsungen in das Möbelelement, insbesondere der Wange, an welchem das weitere Möbelelement befestigt werden soll, geschaffen sein.

Besonders bevorzugt ist das jeweilige Koppelstück in einem mit der Gestalt des Koppelstücks vorzugsweise korrespondierenden Durchbruch im Verbindungselement einführbar, wobei insbesondere das Koppelstück Mittel aufweist zur formschlüssigen Positionierung des jeweiligen Möbelelements am Verbindungselement. Durch diese Ausbildung der Erfindung wird das jeweilige, mit dem Koppelstück versehene Möbelelement allein durch das Koppelstück in dem dazu korrespondierenden Durchbruch in einer festgelegten Position am Verbindungselement positioniert. Die Mittel zur formschlüssigen Positionierung des jeweiligen Möbelelements am Verbindungselement können zum Beispiel am Koppelstück angeformte Vorsprünge sein, welche mit zumindest einer Begrenzungsfläche des Durchbruchs im Verbindungselement korrespondieren.

Besonders bevorzugt ist der jeweilige zur Gestalt des Koppelstücks korrespondierende Durchbruch im Verbindungselement mit Abstand zu den freien Enden des Verbindungselements angeordnet. Dadurch wird bewirkt, dass der zur Aufnahme des jeweiligen Koppelstücks in das Verbindungselement eingebrachte Durchbruch von einer Stirnseite des Verbindungselements nicht sichtbar ist. Dies macht das erfindungsgemäße Möbelsystem ästhetisch besonders ansprechend.

Gemäß einer bevorzugten Weiterbildung der Erfindung ist das Koppelstück formschlüssig an der Stirnseite des jeweiligen Möbelelements angeordnet. Vorzugsweise ist das Koppelstück dabei zumindest teilweise in einer zur Gestalt des Koppelstücks korrespondierende Vertiefung positionierbar. Besonders bevorzugt ist das Koppelstück dabei zusätzlich mittels Schrauben und/oder eines Klebstoffs positionierbar bzw. auch fixierbar. Insbesondere die Positionierung des Koppelstücks in einer zur Gestalt des Koppelstücks korrespondierenden Vertiefung in einem Möbelelement legt allein durch die Ausbildung der Vertiefung die Position des Koppelstücks relativ zum Möbelelement fest. Daher ist das Koppelstück automatisch in einer optimalen Position zur Verbindung des Möbelelements mit dem Verbindungselement. Insbesondere ist die Vertiefung so ausgebildet, dass das Koppelstück das Möbelelement spielfrei bzw. zumindest annähernd spielfrei mit dem Verbindungselement verbindet.

Dadurch, dass die elastische Verformung der Zapfen insbesondere in einer Richtung quer zur Längsausdehnung der jeweiligen Ausnehmung möglich ist, kann das Lösungswerkzeug besonders einfach ausgebildet sein. Insbesondere kann das Lösungswerkzeug derart ausgestaltet sein, dass es sich an Seitenflächen entlang der Längsausdehnung der jeweiligen Ausnehmung, in die es einführbar ist, abstützen kann.

Gemäß einer bevorzugten Weiterbildung der Erfindung weist jedes Koppelstück mehrere Zapfen mit jeweils einem Vorsprung auf, wobei vorzugsweise die Vorsprünge durch eine elastische Verformung zweier Zapfen in entgegengesetzter, vorzugsweise aufeinander gerichteter Richtung, insbesondere quer zur Längsausdehnung der jeweiligen Ausnehmung, außer Eingriff mit dem Verbindungselement bringbar sind. Ein derart ausgebildetes Koppelstück ist in solcher Weise vom Verbindungselement lösbar, dass durch die zur elastischen Verformung zweier Zapfen erforderlichen Kräfte keine resultierenden Kräfte auf ein zum Beispiel zur elastischen Verformung beider Zapfen gleichzeitig ausgestalteten Lösungswerkzeugs verbleiben. Damit ist die Einwirkung des Lösungswerkzeugs auf das jeweilige Koppelstück bzw. die elastisch verformbaren Zapfen des jeweiligen Koppelstücks durch einen Bediener oder Benutzer besonders komfortabel durchführbar.

Vorzugsweise ist das Lösungswerkzeug zur Einwirkung auf an den Zapfen des Koppelstücks angeordnete Kontaktflächen ausgebildet zur elastischen Verformung der Zapfen, wobei die Vorsprünge außer Eingriff mit dem Verbindungselement bringbar sind und vorzugsweise das Lösungswerkzeug mit dem Querschnitt der mindestens einen Ausnehmung korrespondiert. Ein so gestaltetes Lösungswerkzeug wird in der Ausnehmung bzw. im Querschnitt der Ausnehmung geführt. Das Lösungswerkzeug kann damit ohne großen Kraftaufwand in die Ausnehmung eingeführt werden. Die Einwirkung des Lösungswerkzeugs auf die Kontaktflächen des Koppelstücks bewirkt, dass die Vorsprünge außer Eingriff mit dem Verbindungselement gebracht werden. Ein solches Lösungswerkzeug macht die Lösung des oder der Möbelelemente vom Verbindungselement besonders komfortabel.

Gemäß einer bevorzugten Ausgestaltung der Erfindung weist das Lösungswerkzeug an mindestens einer längsseitigen Außenfläche eine nutartige Vertiefung mit vorzugsweise dreieckigem Querschnitt auf, wobei an den Zapfen des Koppelstücks angeordnete Kontaktflächen mit den Innenflächen der nutartigen Vertiefung korrespondieren, und insbesondere die Breite der nutartigen Vertiefung derart bemessen ist, dass bei in die Ausnehmung eingeführtem Lösungswerkzeug die Zapfen des Koppelstücks derart elastisch verformbar sind, dass die Vorsprünge des Koppelstücks außer Eingriff mit dem Verbindungselement bringbar sind. Weiterhin kann die nutartige Vertiefung auch mit einem halbrunden Querschnitt ausgebildet sein, wobei die nutartige Vertiefung dann durch nur eine Kontaktfläche begrenzt wird. Ein derartiges Lösungswerkzeug bewirkt beim Einführen in die Ausnehmung automatisch eine Lösung des Koppelstücks vom Verbindungselement bzw. bringt automatisch die Vorsprünge des Koppelstücks außer Eingriff mit dem Verbindungselement. Demnach ist mit einem derartigen Lösungswerkzeug das Lösen der Möbelelemente vom Verbindungselement besonders komfortabel durchführbar.

Vorzugsweise weist das Lösungswerkzeug einen kreuzförmigen Querschnitt auf, wobei je zwei aneinandergrenzende, durch den kreuzförmigen Querschnitt gebildete Innenflächen des Lösungswerkzeugs jeweils eine nutartige Vertiefung mit einem zumindest annähernd dreieckigen Querschnitt bilden. Es ist auch denkbar, ein Lösungswerkzeug mit einem sternförmigen Querschnitt derart auszubilden, dass die nutartige Vertiefung durch eine einzige Innenfläche gebildet ist. Ein solches, weitergebildetes Lösungswerkzeug des erfindungsgemäßen Möbelsystems kann derart ausgebildet sein, dass die Endbereich der durch den kreuzförmigen Querschnitt gebildeten Stege in kantenartigen Bereichen der Ausnehmung bzw. des Verbindungselements geführt werden. Insbesondere kann ein solches Lösungswerkzeug einfach und komfortabel in ein als Hohlprofil mit insbesondere quadratischem Querschnitt ausgebildetes Verbindungselement eingeführt werden. Die Endbereiche der Stege stützen sich sodann in den Eckbereichen des Hohlprofils ab. Zudem ist ein solches Lösungswerkzeug, wenn sein Querschnitt symmetrisch ist, in vier verschiedenen Ausrichtungen in die durch das Verbindungselement gebildete Ausbildung einführbar.

Es ist gemäß einer weiteren Ausgestaltung der Erfindung denkbar, dass das Lösungswerkzeug vorzugsweise mehrere stabförmige Elemente mit insbesondere jeweils rechteckigem Querschnitt aufweist, wobei eine jeweilige Kontaktfläche am jeweiligen stabförmigen Element zur Einwirkung auf eine jeweilige Kontaktfläche des jeweiligen Zapfens des Koppelelements ausgebildet ist, derart, dass bei in die jeweilige Ausnehmung eingeführtem Lösungswerkzeug die Zapfen des Koppelstücks derart elastisch verformbar sind, dass die Vorsprünge des Koppelstücks außer Eingriff mit dem Verbindungselement sind. Ein solches Lösungswerkzeug kann insbesondere dann vorteilhaft zur Lösung der Möbelelemente vom jeweiligen Verbindungselement eingesetzt werden, wenn die Ausnehmung durch das Verbindungselement und ein Möbelelement gebildet ist, da das Lösungswerkzeug besonders flach ausgebildet sein kann. Die Ausbildung des Lösungswerkzeugs mit vorzugsweise mehreren stabförmigen Elementen kann derart gewählt sein, dass je ein stabförmiges Element auf einen mit einem Vorsprung versehenen Zapfen des Koppelstücks einwirkt und damit den jeweiligen Vorsprung außer Eingriff mit dem Verbindungselement bringt. Insbesondere ist es vorteilhaft, wenn bei einem solchen Lösungswerkzeug die verschiedenen stabförmigen Elemente an einem gemeinsamen Zentralstück angeordnet sind, insbesondere einstückig. Damit kann das Zentralstück als Griff für ein derartiges Lösungswerkzeug dienen und das Lösungswerkzeug ist einfach herstellbar.

Vorteilhafterweise weist das Möbelsystem mehrere, vorzugsweise zwei, Ausnehmungen und ein gabelförmig ausgebildetes Lösungswerkzeug mit insbesondere zwei Zinken als stabförmige Elemente auf. Bei einem derart ausgebildeten Möbelsystem wird erreicht, dass je ein stabförmiges Element in je eine Ausnehmung einführbar ist. Damit kann das jeweilige stabförmige Element derart ausgebildet sein, dass es sich in vorteilhafter Weise an den Begrenzungsflächen bzw. zumindest an einer Begrenzungsfläche der jeweiligen Ausnehmung abstützt und damit besonders sicher auf eine Kontaktfläche des jeweiligen Zapfens des Koppelstücks einwirkt.

Gemäß einer besonders bevorzugten Ausgestaltung der Erfindung weist das Lösungswerkzeug an einer Stirnseite mindestens eine Fase oder eine Rundung auf zur Erleichterung des Einführens in die jeweilige Ausnehmung. Die Fase und/oder Rundung kann derart ausgebildet sein, dass insbesondere bei einem durch das Einführen des Lösungswerkzeugs in die jeweilige Ausnehmung stattfindenden Erstkontakt mit dem Koppelstück bzw. mit einer der Kontaktflächen des Koppelstücks ein nahezu kraftfreies Lösen der Verbindung des Möbelelements vom Verbindungselement erfolgt. Insbesondere ist dabei der jeweilige Vorsprung des Koppelstücks nahezu kraftfrei außer Eingriff mit dem Verbindungselement bringbar.

Besonders bevorzugt sind an der jeweiligen Stirnseite des jeweiligen Möbelelements mehrere, vorzugsweise zwei, Koppelstücke angeordnet. Durch diese Anordnung ist insbesondere dann, wenn die Koppelstücke Mittel zur formschlüssigen Positionierung des Möbelelements am Verbindungselement aufweisen, eine besonders sichere und präzise Positionierung des Möbelelements am Verbindungselement möglich. So wird allein durch die zwei Koppelstücke eine insbesondere verdrehsichere Positionierung des jeweiligen Möbelelements am Verbindungselement bewirkt. Weiterhin können die vorzugsweise zwei Koppelstücke derart angeordnet sein, dass mit einer gemeinsamen Bewegung des Lösungswerkzeugs in die Ausnehmung hinein das jeweilige Möbelelement vom Verbindungselement lösbar ist, insbesondere die Vorsprünge außer Eingriff mit dem Verbindungselement bringbar sind.

Vorzugsweise weisen zumindest einige Möbelelement an mindestens einer Stirnfläche mindestens einen Positionierzapfen auf zur verdrehsicheren Positionierung des jeweiligen Möbelelements am Verbindungselement, wobei vorzugsweise das Verbindungselement je Positionierzapfen einen zum Positionierzapfen korrespondierenden Durchbruch aufweist und der zumindest einen Positionierzapfen in den jeweiligen Durchbruch einbringbar ist. Die Anordnung des oder der Positionierzapfen macht eine verdrehsichere Positionierung des jeweiligen Möbelelements am Verbindungselement möglich. Dadurch können die Koppelstücke derart ausgebildet sein, dass sie bevorzugt nur die formschlüssige lösbare Fixierung des jeweiligen Möbelelements am Verbindungselement bewirken.

Bevorzugte Ausführungsformen der Erfindung werden anhand der Zeichnung näher erläutert. In dieser zeigen:
- Fig. 1: einen Teilbereich eines erfindungsgemäßen Möbelsystems mit vier Möbelelementen und einem Verbindungselement in einer perspektivischen Ansicht,
- Fig. 2: einen Teilbereich eines weiteren erfindungsgemäßen Möbelsystems mit zwei Möbelelementen und einem Verbindungselement in einer perspektivischen Ansicht,
- Fig. 3: einen Abschnitt eines Möbelelements der Fig. 1 und 2 in einer perspektivischen Ansicht,
- Fig. 4: das Verbindungselement der Fig. 1 in einer perspektivischen Ansicht,
- Fig. 5: das Verbindungselement der Fig. 2 in einer perspektivischen Ansicht,
- Fig. 6: ein Koppelstück des erfindungsgemäßen Möbelsystems der Fig. 1 und 2 mit zwei gegenüberliegenden Rastzapfen in einer perspektivischen Ansicht,
- Fig.7: ein Lösungswerkzeug für die Möbelsysteme der Fig. 1 und 2 in einer perspektivischen Ansicht,
- Fig. 8: das Möbelsystem der Fig. 1 in einer geschnittenen Vorderansicht,
- Fig. 9: das Möbelsystem der Fig. 2 in einer geschnittenen Vorderansicht,
- Fig. 10: einen Ausschnitt eines dritten Möbelsystems mit einem als Winkelprofil ausgebildeten Verbindungselement,
- Fig. 11: ein Möbelelement des Möbelsystems der Fig. 10 in einer perspektivischen Ansicht,

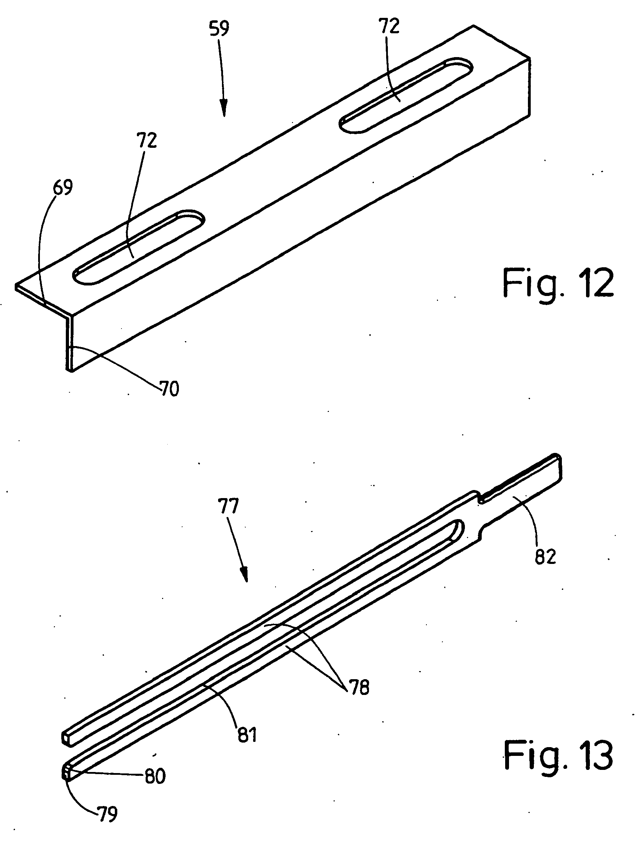

- Fig. 12: das Verbindungselement des Möbelsystems der Fig. 10 in einer perspektivischen Ansicht,
- Fig. 13: ein Lösungswerkzeug für das Möbelsystem der Fig. 10 in einer perspektivischen Ansicht,
- Fig. 14: ein Koppelstück des Möbelsystems der Fig. 10 mit zwei versetzt angeordneten Rastzapfen, und
- Fig. 15: das Möbelsystem der Fig. 10 in einer geschnittenen Vorderansicht.

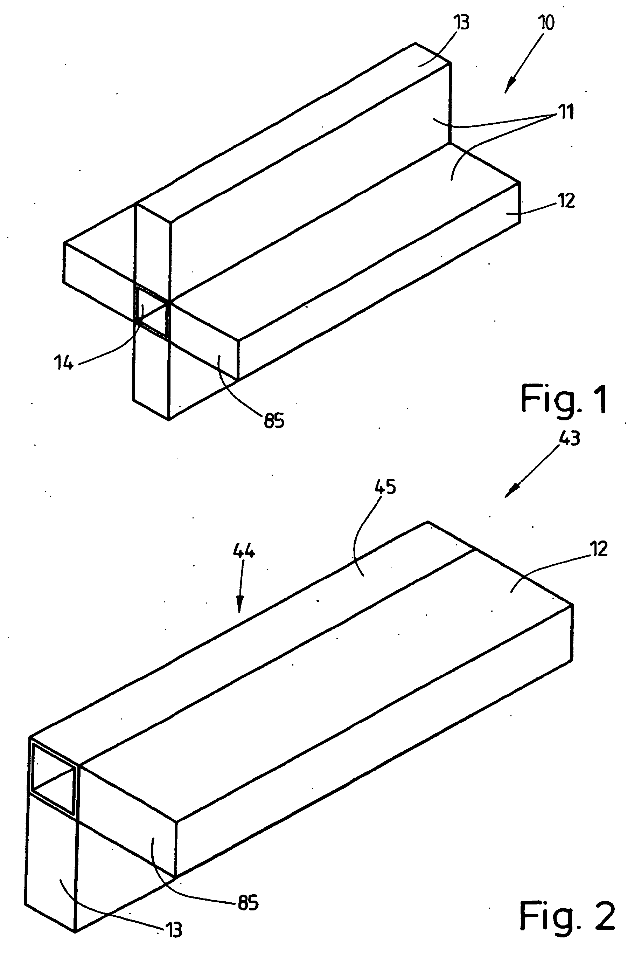

Die Fig. 1 zeigt ein erstes Ausführungsbeispiel der Erfindung, nämlich ein Möbelsystem 10. Dabei ist das Möbelsystem 10 aus Gründen der Übersichtlichkeit nicht vollständig dargestellt. Das Möbelsystem 10 weist mehrere Möbelelemente 11, nämlich Regalböden 12 sowie Wangen 13 auf. Die Regalböden 12 sowie die Wangen 13 sind mit einem Verbindungselement 14 lösbar verbindbar. Insbesondere ist das Möbelsystem 10 Teil eines Regals.

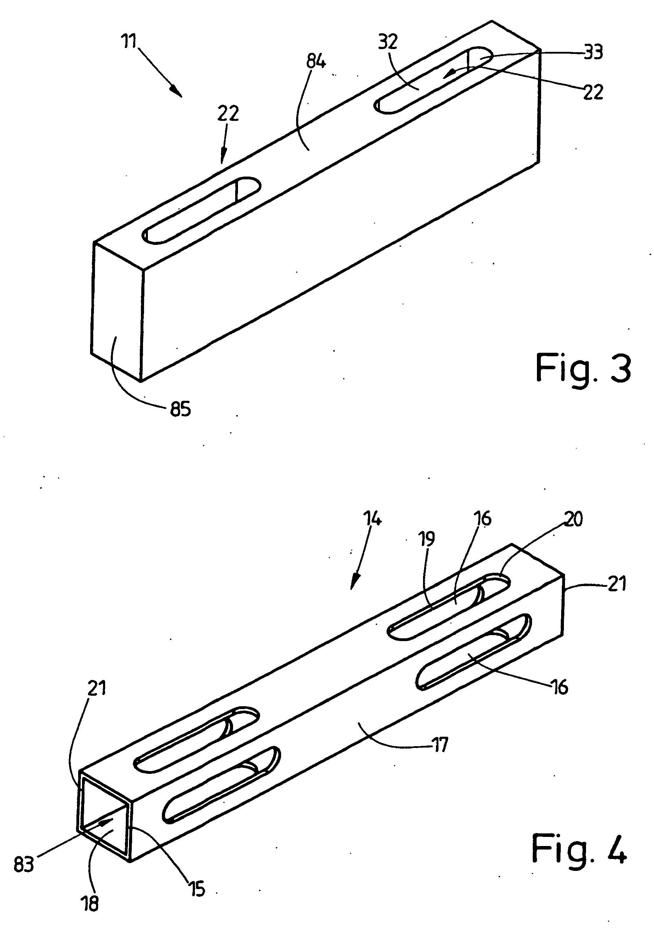

Das in der Fig. 4 detailliert gezeigte Verbindungselement 14 ist im gezeigten Ausführungsbeispiel als Hohlprofil ausgebildet, wobei das Hohlprofil einen quadratischen Querschnitt aufweist und aus Aluminium besteht. Die Wandstärke des als Hohlprofil ausgebildeten Verbindungselements 14 ist dabei klein gegenüber seinen Querschnittsabmessungen. Weiterhin ist denkbar, das Verbindungselement 14 aus Stahl oder einem widerstandsfähigen Kunststoff zu bilden.

Das Verbindungselement 14 weist Außenseiten 17 sowie Innenseiten 18 auf. Durch die Innenseiten 18 wird eine Ausnehmung 83 begrenzt, welche einen konstanten Querschnitt aufweist. Damit entspricht der Querschnitt der Ausnehmung 83 dem Innenquerschnitt des Verbindungselements 14.

Das Verbindungselement weist Abmessungen auf, welche den Abmessungen der Möbelelemente 11 entsprechen. Insbesondere entspricht die Breite der Außenseiten 17 der Dicke der Möbelelemente 11. Die Länge des Verbindungselements 14 entspricht der Tiefe jedes Möbelelements 11, insbesondere also der Tiefe eines Regalbodens 12 oder einer Wange 13. Die Möbelelemente 11 sind im gezeigten Ausführungsbeispiel gleich ausgebildet, sie weisen insbesondere die gleichen Abmessungen auf. Folglich kann jedes Möbelelement an einer Stirnfläche 84 lösbar mit dem Verbindungselement 14 verbunden werden, wobei die Umrisse der Teile sich überdecken.

Innerhalb von das Hohlprofil des Verbindungselements 14 bildenden Stegen 15 sind Durchbrüche 16 angeordnet. Die Durchbrüche 16 erstrecken sich von den Außenseiten 17 des Verbindungselements 14 bis zu den Innenseiten 18. Die Durchbrüche 16 weisen einen langlochartigen Grundriss auf, also je zwei parallele Begrenzungsflächen 19 sowie je zwei, an gegenüberliegenden Endbereichen des langlochartigen Durchbruchs 16 angeordnete, Begrenzungsflächen 20 in Form einer Zylinderfläche auf.

Innerhalb des Verbindungselements 14 sind acht Durchbrüche 16 angeordnet, und zwar jeweils zwei innerhalb jedes Steges 15 des Verbindungselements 14. Die Durchbrüche 16 sind derart angeordnet, dass sie jeweils einen gleichen Abstand zu der jeweiligen Stirnfläche des Verbindungselements 14 sowie zu den Außenseiten 17 des Verbindungselements 14 aufweisen. Die Durchbrüche 16 sind also in einer Richtung quer zum Verbindungselement 14 mittig im selben angeordnet. Des Weiteren sind die Durchbrüche 16 gleich ausgebildet, sie weisen insbesondere eine gleiche Breite, eine gleiche Länge sowie einen gleichen Endradius auf. Die Durchbrüche sind daher am Verbindungselement 14 symmetrisch angeordnet. Damit ist das Verbindungselement 14 in allen acht möglichen Ausrichtungen verwendbar und hat keine zwingend festgelegte alleinige Montageposition.

Die Fig. 3 zeigt einen Ausschnitt eines beliebigen Möbelelements 11, insbesondere Einzelheiten der Stirnfläche 84 des jeweiligen Möbelelements 11. Das Möbelelement 11, insbesondere jedes Möbelelement 11 bzw. jeder Regalboden 12 und jede Wange 13 sind bevorzugt aus Holz oder einer Faser- oder Spanplatte gebildet und weisen eine Dicke auf, welche den Querschnittsabmessungen des Verbindungselements 14 entspricht. Insbesondere ist damit jede Stirnfläche 84 jedes Möbelelements 11 derart bemessen, dass sie in ihren Abmessungen mit jeder Außenseite 17 des Verbindungselements 14 korrespondiert. Es ist zudem denkbar, jedes Möbelelement 11 aus einem Kunststoff zu bilden.

Ausgehend von der Stirnfläche 84 weist jedes Möbelelement 11 zwei Vertiefungen 22 auf. Die Vertiefungen 22 weisen einen Querschnitt auf, welcher in etwa dem Querschnitt der Durchbrüche 16 im Verbindungselement 14 entspricht, wobei jedoch die Länge der Vertiefung 22 etwas größer bemessen ist, als die Länge jedes Durchbruchs 16 im Verbindungselement 14. Die Vertiefungen 22 sind in der Stirnfläche 84 des Möbelelements 11 so angeordnet, dass sie jeweils zu den Kopfflächen 85 des Möbelelements 11 einen gleichen Abstand aufweisen, also derart angeordnet sind, dass sie zumindest teilweise deckungsgleich zu den Durchbrüchen 16 im Verbindungselement 14 liegen.

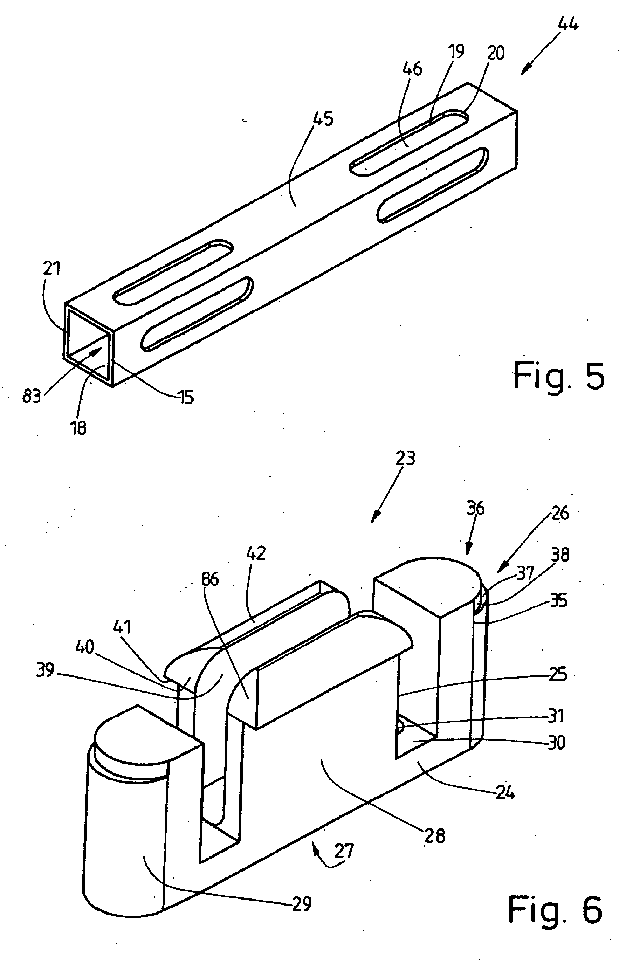

In jeder Vertiefung 22 jedes Möbelelements 11 ist ein Koppelstück 23 angeordnet. Ein solches Koppelstück 23 zeigt die Fig. 6. Jedes Koppelstück 23 weist einen Grundkörper 24 auf, an welchem mehrere Vorsprünge einstückig angeformt sind. Diese Vorsprünge sind insbesondere Rastzapfen 25 sowie Positionierzapfen 26. Die Abmessungen der Rastzapfen 25 sowie der Positionierzapfen 26 sind derart gewählt, dass das Koppelstück 23 in seiner Gestalt geradprismatisch ausgebildet ist. Insbesondere liegen die Rastzapfen 25 sowie Positionierzapfen 26 innerhalb des Umrisses des Grundkörpers 24. Das Koppelelement ist aus einem widerstandsfähigen Kunststoff hergestellt, vorzugsweise im Spritzgussverfahren.

Jedes Koppelstück 23 weist eine Grundfläche 27 sowie Seitenflächen 28 und Stirnflächen 29 auf. Die Seitenflächen 28 werden durch den Grundkörper 24, die Rastzapfen 25 sowie die Positionierzapfen 26 gebildet. Die Stirnflächen 29 werden durch die Positionierzapfen 26 gebildet und sind in Form einer Zylinderwandung ausgebildet, also insbesondere halbrund.

Eine Innenfläche 30 des Koppelstücks 23 wird teilweise begrenzt durch die Rastzapfen 25 und die Positionierzapfen 26. Ausgehend von der Innenfläche 30 weist jedes Koppelstück 23 Bohrungen 31 auf, welche sich in Richtung der prismatischen Ausdehnung des Koppelstücks 23 durch den Grundkörper 24 erstrecken.

Jedes Koppelstück 23 ist so ausgebildet, dass es formschlüssig in die Vertiefungen 22 jedes Möbelelements 11 einbringbar ist. Insbesondere liegen dann die Seitenflächen 28 bzw. die Stirnflächen 29 an seitlichen Innenflächen 32 bzw. Kopfflächen 33 der Vertiefungen 22 spielfrei an. Die Grundfläche 27 des Grundkörpers 24 bzw. des Koppelstücks 23 liegt spielfrei planflächig an einer Bodenfläche 34 der Vertiefung 22 im Möbelelement 11 an. Damit ist durch die Tiefe der Vertiefung 22 die Lage des Koppelstücks insbesondere zur Stirnfläche 84 jedes Möbelelements 11 festgelegt. Mittels Schrauben, welche nicht dargestellt sind, kann jedes Koppelstück 23 durch die Bohrungen 31 hindurch am jeweiligen Möbelelement 11 fixiert werden. Zusätzlich ist es denkbar, jedes Koppelstück 23 durch einen Klebstoff am jeweiligen Möbelelement 11 zu fixieren, also in der jeweiligen Vertiefung 22 festzukleben.

In einem Endbereich 35 jedes Positionierzapfens 26 weist jedes Koppelstück 23 einen Vorsprung 36 auf. Der Vorsprung 36 bildet eine zur Grundfläche 27 des Grundkörpers 24 parallelen Auflagefläche 37 sowie eine Anlagefläche 38, welche entlang einer kreisförmigen Linie verläuft, insbesondere also in Form einer Zylinderfläche ausgebildet ist.

In einem Endbereich 39 weist jeder Rastzapfen 25 je einen Vorsprung 40 auf. Der Vorsprung 40 bildet eine Rastfläche 41, welche rechtwinklig zur Seitenfläche 28 des Koppelstücks 23 und damit parallel zur Grundfläche 27 des Koppelstücks 23 verläuft. Der jeweilige Vorsprung 40 erstreckt sich dabei in Richtung der Seitenfläche 28 über den Umriss des übrigen, geradprismatischen Koppelstücks 23 hinaus. Weiterhin weist jeder Rastzapfen 25 in seinem Endbereich 39 eine Kontaktfläche 42 auf. Diese Kontaktfläche 42 verläuft parallel zur Längsausdehnung des Koppelstücks 23 und ist gegenüber den übrigen Flächen des Koppelstücks 23 schräg, insbesondere zusätzlich leicht gewölbt, ausgebildet. Die Kontaktfläche 42 weist dabei insbesondere einen Winkel von etwa 45° zur Seitenflächen 28 des Koppelstücks 23 auf, wobei der Winkel der Wölbung von 30° bis 60° mit einem fließenden Übergang verläuft. Quer dazu sind je Rastzapfen 25 zwei ebenso ausgebildete Kontaktflächen 86 angeordnet. Die Kontaktflächen 42 sowie 86 weisen vom Koppelstück 23 nach außen.

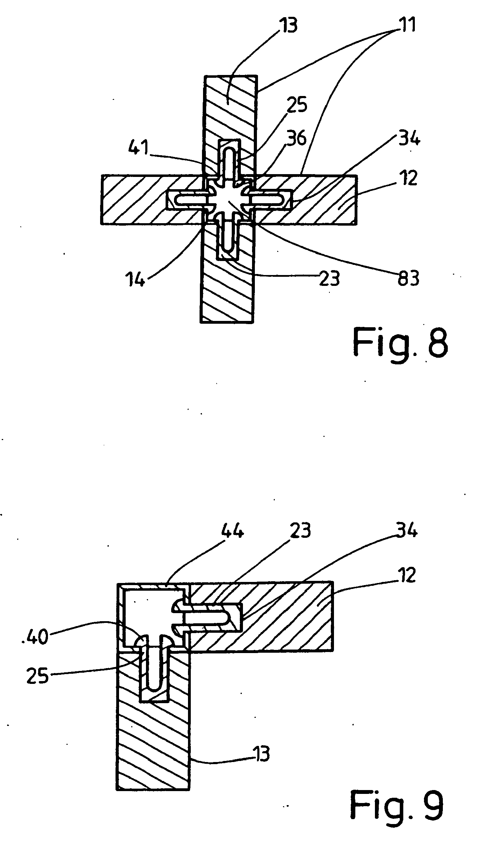

Anhand der Fig. 8 ist die Lage der Koppelstücke 23 innerhalb des Möbelsystems 10 erkennbar. Die Koppelstücke 23 sind derart in jedes Möbelelement 11 eingebracht, dass sie die Möbelelemente 11, also die Regalböden 12 und die Wangen 13 formschlüssig am Verbindungselement 14 fixieren. Die Rastflächen 41 der Koppelstücke 23 liegen an der Innenseite 18 des Verbindungselements spielfrei an, die Vorsprünge 40 befinden sich dabei im Eingriff mit dem Verbindungselement 14. Der Abstand der Rastflächen 41 von der Grundfläche 27 jedes Koppelstücks ist derart bemessen, dass jedes Möbelelement 11 spielfrei mit seiner Stirnfläche 84 an der jeweiligen Außenseite 17 des Verbindungselements 14 anliegt. Die Kontaktflächen 42 an jedem Zapfen 25 erleichtern dabei den Eintritt der Rastzapfen 25 in den jeweiligen Durchbruch 16 des Verbindungselements 14. Dazu sind die Rastzapfen 25 elastisch verformbar, sodass die Vorsprünge 40 durch eine elastische Verformung der Rastzapfen 25 zueinander außer Eingriff mit dem Verbindungselement 14 bringbar sind. Beim Einschieben jedes Koppelelements in das Verbindungselement 14 geschieht die elastische Verformung jedes Rastzapfens 25 an jedem Koppelstück 23 durch den Kontakt der Kontaktflächen 42 mit dem Verbindungselement 14 selbstständig. Damit ist jedes Möbelelement 11 komfortabel mit dem Verbindungselement 14 verbindbar.

Der Abstand der Auflageflächen 37 zur Grundfläche 27 jedes Koppelstücks 23 ist derart bemessen, dass jede Anlagefläche 37 im montierten Zustand des Möbelsystems 10 spielfrei an der jeweiligen Außenseite 17 des Verbindungselements 14 anliegt. Der Abstand der Rastflächen 41 zur Grundfläche 27 des Koppelstücks 23 ist derart bemessen, dass die jeweilige Rastfläche 41 zumindest annähernd spielfrei an der Innenseite 18 des jeweiligen Verbindungselements 11 anliegt. Zusammen mit den Rastflächen 41 ist damit mit den Auflageflächen 37 eine spielfreie Positionierung jedes Möbelelements 11 am Verbindungselement 14 in Richtung senkrecht zu der jeweiligen Außenseite 17 des Verbindungselements 14 möglich. Es ist auch möglich, den Abstand jeweils der Auflageflächen 37 sowie der Rastflächen 41 zur Grundfläche 27 des Koppelstücks 23 derart zu bemessen, dass das Möbelelement 11 mittels des Koppelstücks 23 unter leichter Spannung am Verbindungselement 14 befestigbar ist.

Die Anlageflächen 38 jedes Koppelelements 23 korrespondieren mit der Grundform jedes Durchbruchs 16 des Verbindungselements 14 derart, dass das Koppelstück 23 jedes Möbelelements 11 formschlüssig am Verbindungselement 14 in Richtung der Längserstreckung des Verbindungselements 14 positioniert. Die in das Verbindungselement 14 hineinragenden Bereiche der Seitenflächen 28 des Koppelelements 23 bewirken, dass jedes Möbelelement 11 am Verbindungselement 14 in einer Richtung quer zur Längserstreckung des Verbindungselements 14 formschlüssig positioniert ist. Durch das Koppelstück 23 ist damit jedes Möbelelement 11 formschlüssig am Verbindungselement 14 derart positioniert, dass die Stirnfläche 29 jedes Möbelelements 11 die jeweilige Außenseite 17 des Verbindungselements 14 überdeckt bzw. deren Umrisse übereinanderliegen.

Die Fig. 2 zeigt ein weiteres Möbelsystem 43, welches ähnlich dem in der Fig. 1 gezeigten Möbelsystem 10 ausgebildet ist. Das Möbelsystem 43 weist ebenfalls als Regelböden 12 und Wangen 13 ausgebildete Möbelelemente 11 auf. Zudem weist das Möbelsystem 43 ein Verbindungselement 44 auf, welches ähnlich dem in der Fig. 4 gezeigten Verbindungselement 14 ausgebildet ist. Gleiche Elemente erhalten aus Gründen der Übersichtlichkeit gleiche Bezugsziffern. Das Verbindungselement 44 weist jedoch nur an zwei nebeneinander angeordneten Außenseiten 45 jeweils zwei Durchbrüche 46 auf. Die Durchbrüche 46 sind gleich den Durchbrüchen 16 des ersten Ausführungsbeispiels, sodass diese nicht näher beschrieben werden.

Zwei der Außenseiten 45 weisen keine Durchbrüche auf, sodass an diese Außenseiten 45 keine weiteren Möbelelemente 11 mittels Koppelstücken 23 befestigbar sind. Damit ist das in der Fig. 2 gezeigte Möbelsystem 43 insbesondere dafür geeignet, Eckbereiche zu bilden, sodass zusammen mit dem Möbelsystem 10 der Fig. 1 ein Regal mit ästhetischen Eckbereichen gebildet werden kann. Die Fig. 9 zeigt das Möbelsystem 43 der Fig. 2 in einer geschnittenen Vorderansicht. Alle nicht beschriebenen Details des Möbelsystems 43 entsprechen dem Möbelsystem 10 der Fig. 1.

Weiterhin ist es denkbar ein Verbindungselement mit Durchbrüchen an drei Außenseiten zu versehen, so dass mit diesen drei Außenseiten drei Möbelelemente 11 lösbar verbindbar sind. Das so gebildete Möbelsystem kann dann mit dem Möbelsystem 10 bzw. 43 zusammen ein Regal bilden. Zudem kann ein Verbindungselement mit nur an einer Außenseite angeordneten Durchbrüchen als Abschlussstück für ein Möbelelement verwendet werden.

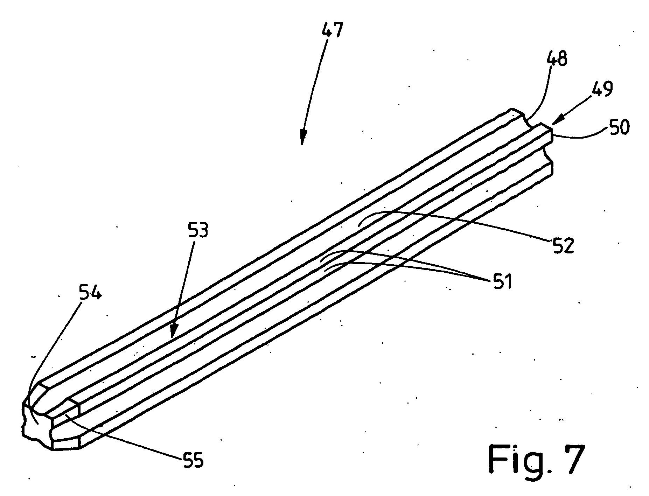

Die Fig. 7 zeigt ein Lösungswerkzeug 47, welches sowohl Teil des Möbelsystems 10 als auch des Möbelsystems 43 sein kann. Das Lösungswerkzeug 47 weist einen sternförmigen Grundkörper 48 auf. Die durch die Sternform des Grundkörpers 48 gebildeten Stege 49 weisen in einem Endbereich 50 jeweils zwei im rechten Winkel zueinander ausgerichtete Kontaktflächen 51 auf, wobei die Kontaktflächen 51 derart angeordnet sind, dass alle Kontaktflächen zusammengenommen mit dem Innenquerschnitt des Verbindungselements 14 bzw. des Verbindungselements 44 korrespondieren. Weiterhin weist das Lösungswerkzeug 47 ebenfalls durch die Stege 49 gebildete Kontaktflächen 52 auf, wobei durch jeweils eine Kontaktfläche 52, welche gekrümmt ausgebildet ist, je eine nutartige Vertiefung 53 gebildet wird, welche einen zumindest annähernd halbrunden Querschnitt aufweist. Insgesamt weist das Lösungswerkzeug 47 damit vier nutartige Vertiefungen 53 mit annähernd halbrundem Querschnitt auf, wobei das Lösungswerkzeug symmetrisch ausgebildet ist. Es ist weiterhin denkbar, die nutartige Vertiefung 53 aus mehreren, insbesondere zwei, aneinanderliegenden Kontaktflächen auszubilden, insbesondere mit einem zumindest annähernd dreieckigen Querschnitt. Das Lösungswerkzeug 47 ist im gezeigten Beispiel aus Holz gefräst, es kann jedoch auch aus einem Kunststoff, vorzugsweise im Spritzgussverfahren, oder einem Metall wie z.B. Aluminium gebildet sein.

Das Lösungswerkzeug 47 weist eine Länge auf, welche größer ist, als die Länge eines Verbindungselements 11 bzw. 44, zudem weist das Lösungswerkzeug 47 mehrere von einer Stirnseite 54 ausgehende Fasen 55 auf. Diese Fasen 55 grenzen an je eine Kontaktfläche 51 und erleichtern das Einführen des Lösungswerkzeugs 47 in das Verbindungselement 14 bzw. 44.

Dadurch, dass das Lösungswerkzeug 47 mit dem Innenquerschnitt des Verbindungselements 14 bzw. 44 korrespondiert, kann es, durch das jeweilige Verbindungselement 14 bzw. 44 geführt, soweit in das jeweilige Verbindungselement 14 bzw. 44 eingeführt werden, dass es mit den Kontaktflächen 42 sowie 86 des Koppelstücks 23 bzw. der Koppelstücke 23 in Kontakt gebracht wird. Durch die nutartige Vertiefung 53 werden die an den Rastzapfen 25 jedes Koppelstücks 23 angeordnete Vorsprünge 40 derart aus ihrer Ruhelage bewegt, dass die Vorsprünge 40 außer Eingriff mit dem Verbindungselement 14 bzw. 44 gebracht werden. Die Kontaktflächen 86 an den Vorsprüngen 40 erleichtern dabei das Einführen des Lösungswerkzeugs 47. Die Rastfläche 41 wird also durch das Lösungswerkzeug 47 außer Kontakt mit der Innenseite 17 des jeweiligen Verbindungselements 14 bzw. 44 gebracht. Jedes Möbelelement 11, insbesondere Regalböden 12 bzw. Wangen 13 sind dann vom Verbindungselement 14 bzw. 44 entfernbar. Folglich ist ein erfindungsgemäßes Möbelsystem 11 bzw. 43 mittels des Lösungswerkzeugs 47 einfach demontierbar.

Dadurch, dass das Lösungswerkzeug je eine nutartige Vertiefung 53 in Richtung jeder Innenseite 18 des Verbindungselements 14 bzw. 44 aufweist, kann mit nur einem Lösungswerkzeug 47 jedes Möbelelement 11 vom Verbindungselement 14 bzw. 44 gelöst werden, egal ob ein oder mehrere Möbelelemente 11 am Verbindungselement 14 bzw. 44 angeordnet sind. Durch die symmetrische Ausbildung des Lösungswerkzeugs 47 kann dasselbe zudem in jeder beliebigen der vier möglichen Ausrichtungen in das Verbindungselement 14 bzw. 44 eingeführt werden. Dadurch, dass die Länge des Lösungswerkzeugs 47 etwas größer bemessen ist als die Länge des Verbindungselements 14 bzw. 44, kann das Lösungswerkzeug 47 soweit in das Verbindungselement 14 bzw. 44 eingeschoben werden, dass beide Koppelstücke 23, welche in jedem Möbelelement 11 angeordnet sind, derart durch das Lösungswerkzeug 47 beeinflusst werden, dass alle Vorsprünge 40 außer Eingriff mit dem Verbindungselement 14 bzw. 44 gebracht werden.

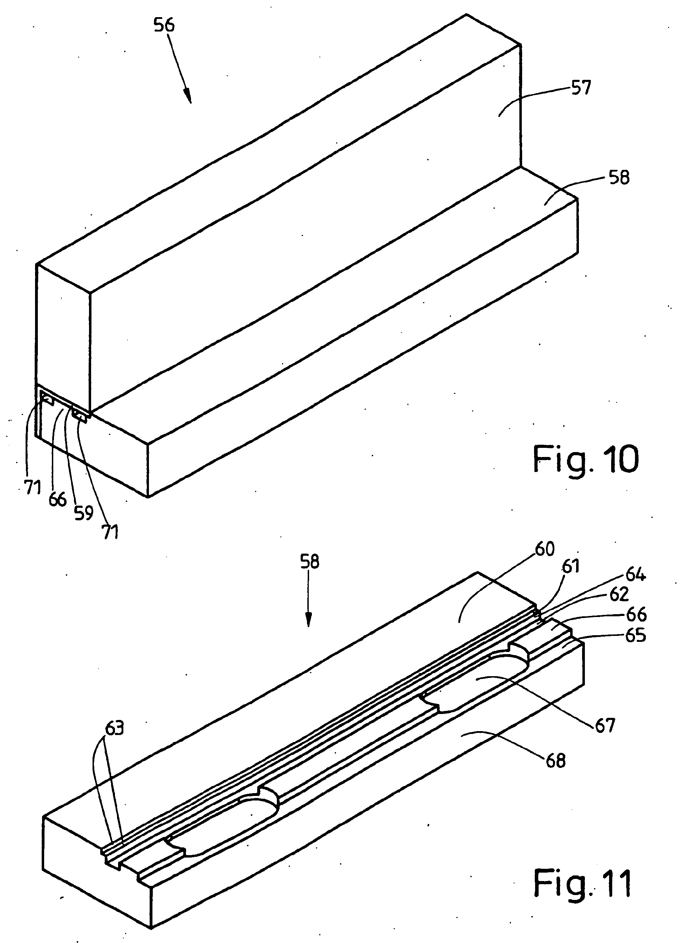

Ein weiteres Möbelsystem 56 zeigt die Fig. 11. Das Möbelsystem 56 weist Möbelelemente 57 sowie Möbelelemente 58 auf. Weiterhin weist das Möbelsystem 56 ein Verbindungselement 59 auf. Das Möbelsystem 56 ist ebenso wie das Möbelsystem 10 und das Möbelsystem 43 nur Ausschnittweise dargestellt. Das Möbelelement 57 entspricht im Wesentlichen den Möbelelementen 11 der beiden vorherigen Ausführungsbeispiele und wird daher nicht näher erläutert.

Das Möbelelement 58 weist eine zu den Möbelelementen 57 bzw. 11 unterschiedliche Ausbildungen auf. An einer Seitenfläche 60 des Möbelelements 58 sind ein Absatz 61 sowie ein Absatz 62 angeordnet. Der Absatz 61 grenzt direkt an die Seitenfläche 60, der Absatz 62 an den Absatz 61 sowie eine Stirnfläche 68 des Möbelelements 58. Der Absatz 61 bildet zwei Flächen 63. Der Absatz 62 bildet eine senkrechte Fläche 64 sowie eine waagerechte Fläche 65. Die waagerechte Fläche 65 wird durch einen Steg 66 in zwei Teile geteilt. Wobei beide Teile der waagerechten Fläche 65 gleiche Abmaße aufweisen. Weiterhin sind langlochartige Vertiefungen 67 in das Möbelelement 58 eingebracht, und zwar derart, dass sich die Vertiefungen 67 sowohl durch den Steg 66 als auch durch die waagerechte Fläche 65 hindurch in das Möbelelement 58 erstrecken. Die Vertiefungen 67 sind in Form eines Sacklochs ausgebildet, verlaufen also nur teilweise durch das Möbelelement 58. Die Vertiefungen 67 verlaufen dabei parallel zur Stirnfläche 68 des Möbelelements 58. Das Möbelelement ist ebenfalls aus Holz oder einer Faser- oder Spanplatte gebildet.

Das Verbindungselement 59 ist als L-förmiges Winkelprofil, vorzugsweise aus Aluminium, ausgebildet, es kann jedoch auch aus Stahl oder einem widerstandsfähigen Kunststoff gebildet sein. Das Verbindungselement 59 weist je einen Steg 69 und einen Steg 70 auf. Die Stege 69 bzw. 70 verlaufen rechtwinklig zueinander. Das Verbindungselement 59 erstreckt sich über eine Länge, welche der Tiefe des Möbelelements 57 sowie des Möbelelements 58 entspricht. Der Steg 69 des Verbindungselements 59 ist derart bemessen, dass das Verbindungselement 59 innerhalb des Absatzes 61 am Möbelelement 58 positionierbar ist. Insbesondere weisen die Stege 69 und 70 eine Dicke auf, welche der Höhe des Absatzes 61 entspricht. Der Steg 70 ist dabei so bemessen, dass er an der Stirnfläche 68 des Möbelelements 58 anliegt. Somit umschließt das Verbindungselement 59 die Stirnfläche 68 sowie die Absätze 61 und 62 des Möbelelements 58. Das Verbindungselement 59 hat dabei solche Abmessungen, dass es mit den Konturen des Möbelelements 58 abschließt. Somit weist das Möbelelement 58 mit daran angeordnetem Verbindungselement 59 Abmessungen auf, welche z.B. denen eines Möbelelements 57 entsprechen. Durch das Verbindungselement 59 und das Möbelelement 58 werden zwei Ausnehmungen 71 begrenzt. Die Ausnehmungen 71. verlaufen parallel zum Verbindungselement 59 und werden durch den Steg 66 voneinander getrennt.

Innerhalb des Stegs 69 des Verbindungselements 59 sind zwei Durchbrüche 72 angeordnet. Damit sind die Durchbrüche 72 an einer zur Seitenfläche 60 des Möbelelements 58 ausgerichteten Seite des Verbindungselements 59 angeordnet. Die Durchbrüche 72 sind annähernd wie die Durchbrüche 16 im Verbindungselement 14 bzw. 44 ausgebildet, und zwar ebenfalls in Form eines Langlochs, weisen jedoch eine geringfügig geringere Breite auf. Insbesondere sind die Durchbrüche 72 analog zu den Durchbrüchen 16 am Verbindungselement 14 bzw. 44 am Verbindungselement 59 positioniert.

Das Verbindungselement 59 ist mit nicht gezeigten Schrauben am Möbelelement 58 anbringbar bzw. fixierbar, wobei ebenfalls denkbar ist, das Verbindungselement 59 an das Möbelelement 58 zu kleben.

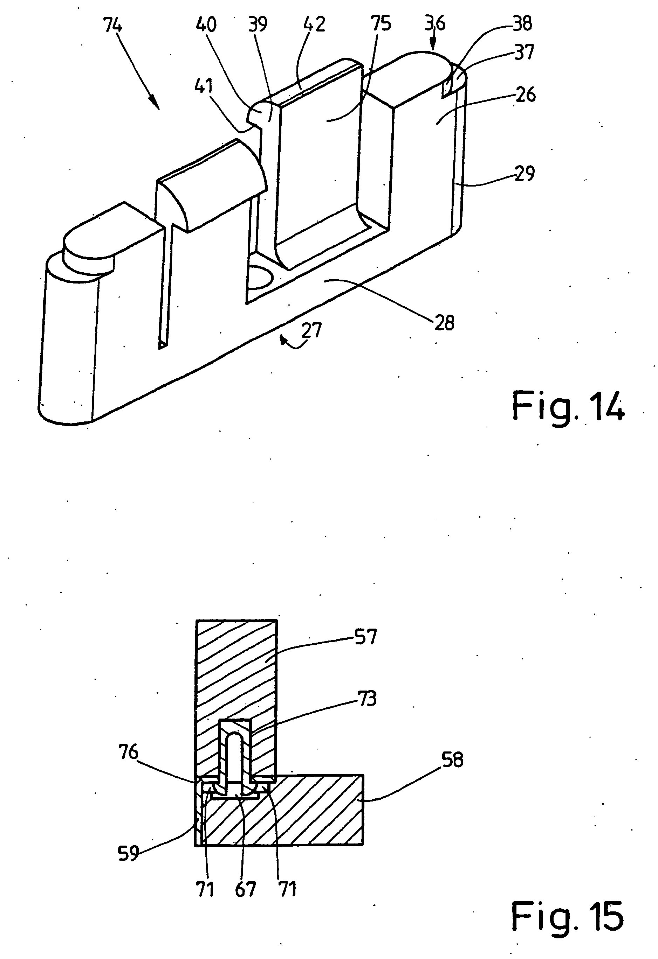

Innerhalb des Möbelelements 57 ist in Vertiefungen 73 je ein Koppelstück 74 einbringbar. Das in der Fig. 14 gezeigte Koppelstück 74 ist dabei ähnlich dem Koppelstück 23 der vorhergehenden zwei Ausführungsbeispiele ausgebildet. Im Unterschied zum Koppelstück 23 weist das Koppelstück 74 jedoch zwei Rastzapfen 75 auf, welche versetzt zueinander am Koppelstück 74 angeordnet sind. Weitere Elemente des Koppelstücks 74, welche Elementen des Koppelstücks 23 entsprechen, sind mit gleichen Bezugsziffern bezeichnet und werden nicht näher erläutert. Das Koppelstück 74 weist gegenüber dem Koppelstück 23 den Unterschied auf, dass der Bewegungsweg des Rastzapfens 75 bei seiner elastischen Verformung nicht durch den jeweils gegenüberliegenden Rastzapfen begrenzt wird, sondern erst durch die Breite der jeweiligen Vertiefung 73. Das Köppelstück 74 eignet sich daher besonders für das Möbelsystem 56, da es platzsparend gegenüber dem Koppelstück 23 der vorhergehenden beiden Ausführungsbeispiele ist. Das Koppelstück 74 ist wie auch das Koppelstück 23 aus einem Kunststoff, vorzugsweise im Spritzgussverfahren, hergestellt.

Das Koppelstück 74 ist derart bemessen, dass das Möbelelement 57 mit seiner Stirnfläche 76 vollflächig am Steg 69 des Verbindungselements 59 positionierbar ist. Die übrige Ausbildung des Koppelstücks 74 entspricht dabei der Ausbildung des Koppelstücks 23 und wird nicht näher erläutert. Folglich ist das Möbelelement 57 am Verbindungselement 59 analog zu den Möbelelementen 11 bzw. dem Verbindungselement 14 lösbar verbindbar.

Die Fig. 14 zeigt ein Lösungswerkzeug 77. Das Lösungswerkzeug 77 ist flächig ausgebildet und weist zwei gabelähnliche Zinken 78 auf. Diese Zinken 78 weisen einen rechteckigen Querschnitt auf, welche mit dem Querschnitt der Ausnehmungen 71 korrespondiert. Die Zinken 78 verlaufen parallel zueinander in der Ebene des flächig ausgebildeten Lösungswerkzeugs 77. Die Länge der Zinken 78 ist dabei so bemessen, dass das Lösungswerkzeug 77, insbesondere die Zinken 78 mit dem Einführen des Lösungswerkzeugs 77 in die Ausnehmungen 71 des Möbelsystems 56 in Kontakt mit beiden im Möbelsystem 56 angeordneten Koppelstücken 74 bringbar ist.

An einer Stirnseite 79 jeder der Zinken 78 weist das Lösungswerkzeug 77 eine Rundung 80 auf, welche insbesondere an die Stirnseite 79 und eine jeweilige Innenseite 81 der Zinken 78 angrenzt. Das Lösungswerkzeug weist des Weiteren einen Griff 82 auf, welcher einstückig an die Zinken 78 angeformt ist, insbesondere die Zinken 78 miteinander verbindet.

Das Lösungswerkzeug 77 kann mit seinen Zinken 78 in die Ausnehmungen 71 eingeführt werden. Die Innenseiten 81 wirken dabei auf Kontaktflächen 42 jedes Koppelstücks 74 ein, sodass die Zapfen 75 derart elastisch verformbar sind, dass die Vorsprünge 40 des Koppelstücks 74 außer Eingriff mit dem Verbindungselement 59 bringbar sind. Dadurch, dass das Lösungswerkzeug 77 in die Ausnehmungen 71 einführbar ist, kann also das Möbelelement 57 vom Verbindungselement 59 gelöst werden. Das Lösungswerkzeug 77 ist aus einem Kunststoff, vorzugsweise im Spritzgussverfahren, gebildet, es kann jedoch auch aus einem Metall, wie z.B. Aluminium oder Stahl, oder aus Holz gebildet sein.

Weiterhin ist selbstverständlich denkbar, das Koppelstück 23 in einem Möbelsystem 56 zu verwenden, sowie das Koppelstück 74 innerhalb eines Möbelsystems 10 oder 43 zu verwenden.

Zudem kann jedes Möbelelement 11 und 58 nicht dargestellte Positionierzapfen aufweisen, welche senkrecht aus der jeweiligen Stirnfläche 21 bzw. 68 herausragen. Vorzugsweise weisen diese Positionierzapfen dann einen runden Querschnitt auf. Im Verbindungselement 14, 44 oder 59 sind dann zu den Positionierzapfen korrespondierende Durchbrüche angeordnet, in welche die Positionierzapfen einführbar sind. Diese Anordnung dient der Erhöhung der Stabilität des jeweiligen Möbelsystems und kann daher insbesondere für Regale oder ähnliche Möbelstücke eingesetzt werden, welche hohen Belastungen ausgesetzt sind.

### Bezugszeichenliste:

- 10: Möbelsystem
- 11: Möbelelement
- 12: Regalboden
- 13: Wange
- 14: Verbindungselement
- 15: Steg
- 16: Durchbruch
- 17: Außenseite
- 18: Innenseite
- 19: Begrenzungsfläche
- 20: Begrenzungsfläche
- 21: Stirnfläche
- 22: Vertiefung
- 23: Koppelstück
- 24: Grundkörper
- 25: Rastzapfen
- 26: Positionierzapfen
- 27: Grundfläche
- 28: Seitenfläche
- 29: Stirnfläche
- 30: Innenfläche
- 31: Bohrung
- 32: seitliche Innenfläche
- 33: Kopffläche
- 34: Bodenfläche
- 35: Endbereich
- 36: Vorsprung
- 37: Auflagefläche
- 38: Anlagefläche
- 39: Endbereich
- 40: Vorsprung
- 41: Rastfläche
- 42: Kontaktfläche
- 43: Möbelsystem
- 44: Verbindungselement
- 45: Außenseite
- 46: Durchbruch
- 47: Lösungswerkzeug
- 48: Grundkörper
- 49: Steg
- 50: Endbereich
- 51: Kontaktfläche
- 52: Kontaktfläche
- 53: nutartige Vertiefung
- 54: Stirnseite
- 55: Fase
- 56: Möbelsystem
- 57: Möbelelement
- 58: Möbelelement
- 59: Verbindungselement
- 60: Seitenfläche
- 61: Absatz
- 62: Absatz
- 63: Flächen
- 64: senkrechte Fläche
- 65: waagerechte Fläche
- 66: Steg
- 67: Vertiefung
- 68: Stirnfläche
- 69: Steg
- 70: Steg
- 71: Ausnehmung
- 72: Durchbruch
- 73: Vertiefung
- 74: Koppelstück
- 75: Rastzapfen
- 76: Stirnfläche
- 77: Lösungswerkzeug
- 78: Zinken
- 79: Stirnseite
- 80: Rundung
- 81: Innenseite
- 82: Griff
- 83: Ausnehmung
- 84: Stirnfläche
- 85: Kopffläche
- 86: Kontaktfläche

## Patentansprüche

1. Möbelsystem zur Bildung eines Regals oder eines regalähnlichen Möbelstücks mit mehreren Möbelelementen wie Borten, Wangen oder dergleichen und mindestens einem Verbindungselement zum Verbinden der Möbelelemente, wobei die Möbelelemente mittels zumindest jeweils einem, an einer Stirnseite des jeweiligen Möbelelements angeordneten Koppelstücks mit dem mindestens einen Verbindungselement lösbar formschlüssig verbindbar sind, wobei mindestens eine Ausnehmung (83) im jeweiligen Möbelelement (58) und/oder im Verbindungselement (14, 44, 59) vorgesehen ist, wobei ein Lösungswerkzeug (47, 77) in die Ausnehmung (71, 83) einführbar ist zum Lösen der Verbindung zwischen dem jeweiligen Möbelelement (11) und dem Verbindungselement (14, 44, 59) durch Einwirkung des Lösungswerkzeugs (47, 77) auf das Koppelstück (23, 47), wobei das Koppelstück (23, 74) Vorsprünge (40) aufweist, welche mit dem Verbindungselement (14, 44, 59) in Eingriff bringbar sind, **dadurch gekennzeichnet, dass** die Vorsprünge (40) an elastisch verformbaren Zapfen des Koppelstücks (23, 74) angeordnet sind und dass die Vorsprünge (40) durch elastische Verformung der Zapfen außer Eingriff mit dem Verbindungselement (14, 44, 59) bringbar sind.

2. Möbelsystem nach Anspruch 1, **dadurch gekennzeichnet, dass** die jeweilige Ausnehmung (83) im Verbindungselement (14, 44) gebildet ist, wobei insbesondere das Verbindungselement (14, 44) ein Hohlprofil ist, welches vorzugsweise einen rechteckigen, insbesondere einen quadratischen Querschnitt aufweist.

3. Möbelsystem nach Anspruch 1, **dadurch gekennzeichnet, dass** die jeweilige Ausnehmung (71) durch das Verbindungselement (59) und durch ein Möbelelement (58) begrenzt ist, wobei insbesondere das Verbindungselement (14) ein Winkelprofil ist und wobei die jeweilige Ausnehmung (71) durch einen Schenkel des Winkelprofils und ein Möbelelement (58) begrenzt ist.

4. Möbelsystem nach einem oder mehreren der vorhergehenden Ansprüche, **dadurch gekennzeichnet, dass** das jeweilige Koppelstück (23, 74) in einen mit der Gestalt des Koppelstücks (23, 74) vorzugsweise korrespondierenden Durchbruch (16, 46, 72) im Verbindungselement (14, 44, 59) einführbar ist, wobei insbesondere das Koppelstück Mittel aufweist zur formschlüssigen Positionierung des jeweiligen Möbelelementes am Verbindungselement.

5. Möbelsystem nach einem oder mehreren der vorhergehenden Ansprüche, **dadurch gekennzeichnet, dass** der jeweilige zur Gestalt des Koppelstücks (23, 74) korrespondierende Durchbruch (16, 46, 72) im Verbindungselement mit Abstand zu den freien Enden des Verbindungselements angeordnet ist.

6. Möbelsystem nach einem oder mehreren der vorhergehenden Ansprüche, **dadurch gekennzeichnet, dass** das Koppelstück (23, 74) formschlüssig an der Stirnseite (29, 76) des jeweiligen Möbelelementes (11, 57) angeordnet ist, vorzugsweise zumindest teilweise in eine zur Gestalt des Koppelstücks (23, 59) korrespondierende Vertiefung (22, 73) positionierbar ist, insbesondere mittels Schrauben und/oder eines Klebstoffs.

7. Möbelsystem nach einem oder mehreren der vorhergehenden Ansprüche, **dadurch gekennzeichnet, dass** die Vorsprünge (40) durch elastische Verformung der Zapfen in einer Richtung quer zur Längsausdehnung der jeweiligen Ausnehmung (71, 83) außer Eingriff mit dem Verbindungselement (14, 44, 59) bringbar sind.

8. Möbelsystem nach einem oder mehreren der vorhergehenden Ansprüche, **dadurch gekennzeichnet, dass** jedes Koppelstück (23, 74) mehrere Zapfen mit jeweils einem Vorsprung (40) aufweist, wobei vorzugsweise die Vorsprünge (40) durch eine elastische Verformung zweier Zapfen in entgegengesetzter, vorzugsweise aufeinander gerichteter Richtung, insbesondere quer zur Längsausdehnung der jeweiligen Ausnehmung (71, 83) außer Eingriff mit dem Verbindungselement (14, 44, 59) bringbar sind.

9. Möbelsystem nach einem oder mehreren der vorhergehenden Ansprüche, **dadurch gekennzeichnet, dass** das Lösungswerkzeug (47, 77) zur Einwirkung auf an den Zapfen des Koppelstücks (23, 74) angeordnete Kontaktflächen (42) ausgebildet ist zur elastischen Verformung der Zapfen, wobei die Vorsprünge (40) außer Eingriff mit dem Verbindungselement (14, 44, 59) bringbar sind, wobei vorzugsweise das Lösungswerkzeug (47, 77) mit dem Querschnitt der mindestens einen Ausnehmung (71, 83) korrespondiert.

10. Möbelsystem nach einem oder mehreren der vorhergehenden Ansprüche, **dadurch gekennzeichnet, dass** das Lösungswerkzeug an mindestens einer längsseitigen Außenfläche eine nutartige Vertiefung mit vorzugsweise dreieckigem Querschnitt aufweist, wobei an den Zapfen des Koppelstücks angeordnete Kontaktflächen mit den Innenflächen der nutartigen Vertiefung korrespondieren, und insbesondere die Breite der nutartigen Vertiefung derart bemessen ist, dass bei in die Ausnehmung eingeführtem Lösungswerkzeug die Zapfen des Koppelstücks derart elastisch verformbar sind, dass die Vorsprünge des Koppelstücks außer Eingriff mit dem Verbindungselement bringbar sind.

11. Möbelsystem nach einem oder mehreren der vorhergehenden Ansprüche, **dadurch gekennzeichnet, dass** das Lösungswerkzeugs (47) einen kreuzförmigen Querschnitt aufweist, wobei je zwei aneinandergrenzende, durch den kreuzförmigen Querschnitt gebildete Innenflächen des Lösungswerkzeugs (47) jeweils eine nutartige Vertiefung (53) mit einem zumindest annähernd dreieckigen und/oder halbrunden Querschnitt bilden.

12. Möbelsystem nach einem oder mehreren der vorhergehenden Ansprüche, **dadurch gekennzeichnet, dass** das Lösungswerkzeug (77) vorzugsweise mehrere stabförmige Elemente mit insbesondere rechteckigem Querschnitt aufweist, wobei eine jeweilige Kontaktfläche am jeweiligen stabförmigen Element zur Einwirkung auf eine jeweilige Kontaktfläche des jeweiligen Zapfens des Koppelelements (23, 74) ausgebildet ist, derart, dass bei in die jeweilige Ausnehmung (71) eingeführtem Lösungswerkzeug (77) die Zapfen des Koppelstücks (23, 74) derart elastisch verformbar sind, dass die Vorsprünge (40) des Koppelstücks (23, 74) außer Eingriff mit dem Verbindungselement (59) sind.

13. Möbelsystem nach einem oder mehreren der vorhergehenden Ansprüche, **gekennzeichnet durch** mehrere, vorzugsweise zwei, Ausnehmungen (71) und ein gabelförmig ausgebildetes Lösungswerkzeug (77) mit insbesondere zwei Zinken (78) als stabförmige Elemente.

14. Möbelsystem nach einem oder mehreren der vorhergehenden Ansprüche, **dadurch gekennzeichnet, dass** das Lösungswerkzeug (47, 77) an einer Stirnseite (54, 79) mindestens eine Fase (55) oder eine Rundung (80) aufweist zur Erleichterung des Einführens in die jeweilige Ausnehmung (71, 83).

15. Möbelsystem nach einem oder mehreren der vorhergehenden Ansprüche, **dadurch gekennzeichnet, dass** an der jeweiligen Stirnseite (29, 76) des jeweiligen Möbelelements (11, 57) mehrere, vorzugsweise zwei, Koppelstücke (23, 74) angeordnet sind.

16. Möbelsystem nach einem oder mehreren der vorhergehenden Ansprüche, **dadurch gekennzeichnet, dass** zumindest einige Möbelelemente (11, 57) an mindestens einer Stirnfläche (29) mindestens einen Positionierzapfen aufweisen zur verdrehsicheren Positionierung des jeweiligen Möbelelementes (11, 57) am Verbindungselement (14, 44, 59), wobei vorzugsweise das Verbindungselement (14, 44, 59) je Positionierzapfen einen zum Positionierzapfen korrespondierenden Durchbruch aufweist und der zumindest eine Positionierzapfen in den jeweiligen Durchbruch einbringbar ist.

## Claims

1. Furniture system for forming a shelf or a shelf-like piece of furniture, having a plurality of furniture elements such as cornices, frame pieces or the like and at least one connecting element for connecting the furniture elements, wherein the furniture elements may be detachably form-fittingly connected to the at least one connecting element by means of in each case at least one coupling piece which is arranged on an end side of the respective furniture element, wherein at least one cutout (83) is provided in the respective furniture element (58) and/or in the connecting element (14, 44, 59), wherein a releasing tool (47, 77) may be inserted into the cutout (71, 83) for releasing the connection between the respective furniture element (11) and the connecting element (14, 44, 59) by the action of the releasing tool (47, 77) on the coupling piece (23, 74), wherein the coupling piece (23, 74) has projections (40) which may be brought into engagement with the connecting element (14, 44, 59), **characterized in that** the projections (40) are arranged on resiliently deformable pegs on the coupling piece (23, 74), and **in that** the projections (40) may be brought out of engagement with the connecting element (14, 44, 59) by resilient deformation of the pegs.

2. Furniture system according to Claim 1, **characterized in that** the respective cutout (83) is formed in the connecting element (14, 44), wherein in particular the connecting element (14, 44) is a hollow profile which is preferably rectangular and in particular square in cross section.

3. Furniture system according to Claim 1, **characterized in that** the respective cutout (71) is delimited by the connecting element (59) and a furniture element (58), wherein in particular the connecting element (14) is an angled profile, and wherein the respective cutout (71) is delimited by a limb of the angled profile and a furniture element (58).

4. Furniture system according to one or more of the preceding claims, **characterized in that** the respective coupling piece (23, 74) may be inserted into an aperture (16, 46, 72) in the connecting element (14, 44, 59) that preferably corresponds to the shape of the coupling piece (23, 74), wherein in particular the coupling piece includes means for the form-fitting positioning of the respective furniture element on the connecting element.

5. Furniture system according to one or more of the preceding claims, **characterized in that** the respective aperture (16, 46, 72) which corresponds to the shape of the coupling piece (23, 74) is arranged in the connecting element at a spacing from the free ends of the connecting element.

6. Furniture system according to one or more of the preceding claims, **characterized in that** the coupling piece (23, 74) is arranged form-fittingly on the end side (29, 76) of the respective furniture element (11, 57), preferably such that it may be positioned at least partly in a depression (22, 73) that corresponds to the shape of the coupling piece (23, 74), in particular by means of screws and/or an adhesive.

7. Furniture system according to one or more of the preceding claims, **characterized in that** the projections (40) may be brought out of engagement with the connecting element (14, 44, 59) by resilient deformation of the pegs in a direction transverse to the longitudinal extent of the respective cutout (71, 83).

8. Furniture system according to one or more of the preceding claims, **characterized in that** each coupling piece (23, 74) has a plurality of pegs each with a projection (40), wherein the projections (40) may preferably be brought out of engagement with the connecting element (14, 44, 59) by resilient deformation of two pegs in opposing directions, preferably pointing towards one another, in particular transversely in relation to the longitudinal extent of the respective cutout (71, 83).

9. Furniture system according to one or more of the preceding claims, **characterized in that** the releasing tool (47, 77) is constructed for acting on contact faces (42) which are arranged on the pegs of the coupling piece (23, 74), for resilient deformation of the pegs, wherein the projections (40) may be brought out of engagement with the connecting element (14, 44, 59), wherein preferably the releasing tool (47, 77) corresponds to the cross section of at least one cutout (71, 83).

10. Furniture system according to one or more of the preceding claims, **characterized in that** the releasing tool has on at least one lengthwise outer face a groove-like depression which is preferably triangular in cross section, wherein contact faces arranged on the pegs on the coupling piece correspond to the inner faces of the groove-like depression, and in particular the width of the groove-like depression is dimensioned such that when the releasing tool is inserted into the cutout the pegs on the coupling piece are resiliently deformable such that the projections on the coupling piece may be brought out of engagement with the connecting element.

11. Furniture system according to one or more of the preceding claims, **characterized in that** the releasing tool (47) is cross-shaped in cross section, wherein in each case two mutually adjoining inner faces of the releasing tool (47) which are formed by the cross-shaped cross section each form a groove-like depression (53) which is at least approximately triangular and/or semicircular in cross section.

12. Furniture system according to one or more of the preceding claims, **characterized in that** the releasing tool (77) has preferably a plurality of rod-shaped elements which are in particular rectangular in cross section, wherein a respective contact face on the respective rod-shaped element is constructed for acting on a respective contact face of the respective peg on the coupling element (23, 74) such that when the releasing tool (77) is inserted into the respective cutout (71) the pegs on the coupling piece (23, 74) are resiliently deformable such that the projections (40) on the coupling piece (23, 74) are out of engagement with the connecting element (59).

13. Furniture system according to one or more of the preceding claims, **characterized by** a plurality of, preferably two, cutouts (71) and a forked releasing tool (77) having in particular two tines (78) as the rod-shaped elements.

14. Furniture system according to one or more of the preceding claims, **characterized in that** the releasing tool (47, 77) has on one end side (54, 79) at least one chamfer (55) or a rounded portion (80) for facilitating insertion into the respective cutout (71, 83).

15. Furniture system according to one or more of the preceding claims, **characterized in that** a plurality of, preferably two, coupling pieces (23, 74) are arranged on the respective end side (29, 76) of the respective furniture element (11, 57).

16. Furniture system according to one or more of the preceding claims, **characterized in that** at least some furniture elements (11, 57) have on at least one end side (29) at least one positioning peg for positioning the respective furniture element (11, 57) on the connecting element (14, 44, 59) such that it is prevented from twisting, wherein preferably the connecting element (14, 44, 59) has for each positioning peg an aperture that corresponds to the positioning peg, and the at least one positioning peg may be inserted into the respective aperture.

## Revendications

1. Système de meuble servant à former une étagère ou un meuble similaire à une étagère doté de plusieurs éléments de meuble tels que des bordures, des joues ou similaires et d'au moins un élément de jonction servant à relier les éléments de meuble, les éléments de meuble pouvant être reliés par complémentarité de formes et de façon amovible à l'au moins un élément de jonction à l'aide d'au moins respectivement une pièce d'accouplement disposée au niveau d'un côté avant de l'élément de meuble respectif, au moins un évidement (83) étant prévu dans l'élément de meuble (58) respectif et/ou dans l'élément de jonction (14, 44, 59), un outil de démontage (47, 77) pouvant être introduit dans l'évidement (71, 83) pour démonter la jonction réalisée entre l'élément de meuble (11) respectif et l'élément de jonction (14, 44, 59) par actionnement de l'outil de démontage (47, 77) sur la pièce d'accouplement (23, 74), la pièce d'accouplement (23, 74) comportant des saillies (40) pouvant être amenées en prise avec l'élément de jonction (14, 44, 59), **caractérisé en ce que** les saillies (40) sont disposées au niveau de tenons élastiquement déformables de la pièce d'accouplement (23, 74) et **en ce que** les saillies (40) peuvent être amenées hors de prise de l'élément de jonction (14, 44, 59) par déformation élastique des tenons.

2. Système de meuble selon la revendication 1, **caractérisé en ce que** l'évidement (83) respectif est formé dans l'élément de jonction (14, 44), l'élément de jonction (14, 44) étant notamment un profilé creux présentant de préférence une section transversale rectangulaire, notamment carrée.

3. Système de meuble selon la revendication 1, **caractérisé en ce que** l'évidement (71) respectif est délimité par l'élément de jonction (59) et par un élément de meuble (58), l'élément de jonction (14) étant notamment un profilé en angle et l'évidement (71) respectif étant délimité par un côté du profilé en angle et par un élément de meuble (58).

4. Système de meuble selon l'une quelconque des revendications précédentes ou plusieurs d'entre elles, **caractérisé en ce que** la pièce d'accouplement (23, 74) respective peut être introduite dans un passage traversant (16, 46, 72) prévu dans l'élément de jonction (14, 44, 59) et correspondant de préférence à la forme de la pièce d'accouplement (23, 74), la pièce d'accouplement comportant notamment des moyens de positionnement par complémentarité de formes de l'élément de meuble respectif au niveau de l'élément de jonction.

5. Système de meuble selon l'une quelconque des revendications précédentes ou plusieurs d'entre elles, **caractérisé en ce que** le passage traversant (16, 46, 72) respectif correspondant à la forme de la pièce d'accouplement (23, 74) est disposé dans l'élément de jonction à une certaine distance des extrémités libres de l'élément de jonction.

6. Système de meuble selon l'une quelconque des revendications précédentes ou plusieurs d'entre elles, **caractérisé en ce que** la pièce d'accouplement (23, 74) est disposée par complémentarité de formes au niveau du côté avant (29, 76) de l'élément de meuble (11, 57) respectif, de préférence de façon à pouvoir être positionnée au moins en partie dans un renfoncement (22, 73) correspondant à la forme de la pièce d'accouplement (23, 74), notamment à l'aide de vis et/ou de colle.

7. Système de meuble selon l'une quelconque des revendications précédentes ou plusieurs d'entre elles, **caractérisé en ce que** les saillies (40) peuvent être amenées hors de prise de l'élément de jonction (14, 44, 59) par déformation élastique des tenons dans une direction transversale à l'allongement longitudinal de l'évidement (71, 83) respectif.

8. Système de meuble selon l'une quelconque des revendications précédentes ou plusieurs d'entre elles, **caractérisé en ce que** chaque pièce d'accouplement (23, 74) comporte plusieurs tenons respectivement dotés d'une saillie (40), les saillies (40) pouvant de préférence être amenées hors de prise de l'élément de jonction (14, 44, 59) par une déformation élastique de deux tenons dans une direction opposée, de préférence alignée, notamment transversalement à l'allongement longitudinal de l'évidement (71, 83) respectif.

9. Système de meuble selon l'une quelconque des revendications précédentes ou plusieurs d'entre elles, **caractérisé en ce que** l'outil de démontage (47, 77) est réalisé pour agir sur les surfaces de contact (42) disposées contre les tenons de la pièce d'accouplement (23, 74) pour permettre la déformation élastique des tenons, les saillies (40) pouvant être amenées hors de prise de l'élément de jonction (14, 44, 59), l'outil de démontage (47, 77) correspondant de préférence à la section transversale de l'au moins un évidement (71, 83).

10. Système de meuble selon l'une quelconque des revendications précédentes ou plusieurs d'entre elles, **caractérisé en ce que** l'outil de démontage comporte un renfoncement de type rainure de section transversale de préférence triangulaire au niveau d'au moins une surface extérieure positionnée sur le côté longitudinal, les surfaces de contact disposées contre les tenons de la pièce d'accouplement correspondant aux surfaces intérieures du renfoncement de type rainure, et la largeur du renfoncement de type rainure étant notamment dimensionnée de telle sorte que lorsque l'outil de démontage est introduit dans l'évidement, les tenons de la pièce d'accouplement peuvent être déformés élastiquement de façon à permettre d'amener les saillies de la pièce d'accouplement hors de prise de l'élément de jonction.

11. Système de meuble selon l'une quelconque des revendications précédentes ou plusieurs d'entre elles, **caractérisé en ce que** l'outil de démontage (47) présente une section transversale cruciforme, respectivement deux surfaces intérieures de l'outil de démontage (47) connexes formées par la section transversale cruciforme formant respectivement un renfoncement (53) de type rainure dont la section transversale est au moins approximativement triangulaire et/ou semi-circulaire.

12. Système de meuble selon l'une quelconque des revendications précédentes ou plusieurs d'entre elles, **caractérisé en ce que** l'outil de démontage (77) comporte de préférence plusieurs éléments en forme de tige de section transversale notamment rectangulaire, une surface de contact respective étant notamment réalisée au niveau de l'élément en forme de tige pour agir sur une surface de contact respective du tenon respectif de l'élément d'accouplement (23, 74), de telle sorte que lorsque l'outil de démontage (77) est introduit dans l'évidement (71) respectif, les tenons de la pièce d'accouplement (23, 74) sont élastiquement déformables de façon à permettre aux saillies (40) de la pièce d'accouplement (23, 74) d'être hors de prise de l'élément de jonction (59).

13. Système de meuble selon l'une quelconque des revendications précédentes ou plusieurs d'entre elles, **caractérisé par** la présence de plusieurs évidements (71), de préférence deux, et d'un outil de démontage (77) réalisé en forme de fourche et notamment doté de deux dents (78) servant d'éléments en forme de tige.

14. Système de meuble selon l'une quelconque des revendications précédentes ou plusieurs d'entre elles, **caractérisé en ce que** l'outil de démontage (47, 77) comporte au niveau d'un côté avant (54, 79) au moins un biseau (55) ou un arrondi (80) permettant de faciliter l'introduction dans l'évidement (71, 83) respectif.

15. Système de meuble selon l'une quelconque des revendications précédentes ou plusieurs d'entre elles, **caractérisé en ce que** plusieurs pièces d'accouplement (23, 74), de préférence deux, sont disposées au niveau du côté avant (29, 76) respectif de l'élément de meuble (11, 57) respectif.

16. Système de meuble selon l'une quelconque des revendications précédentes ou plusieurs d'entre elles, **caractérisé en ce qu'**au moins quelques éléments de meuble (11, 57) comportent au niveau d'au moins une surface avant (29) au moins un tenon de positionnement permettant de positionner de façon sécurisée contre les torsions l'élément de meuble (11, 57) respectif contre l'élément de jonction (14, 44, 59), l'élément de jonction (14, 44, 59) comportant de préférence un passage traversant correspondant au tenon de positionnement pour chaque tenon respectif et l'au moins un tenon de positionnement pouvant être amené dans le passage traversant respectif.
